# EUROPÄISCHE PATENTSCHRIFT

(11) **EP 1 041 196 B1**
(45) Veröffentlichungstag und Bekanntmachung des Hinweises auf die Patenterteilung: **20.08.2003**
(21) Anmeldenummer: 00105578.9
(22) Anmeldetag: 16.03.2000
(51) Int. Cl.: D21G 1/02

(54) **Walze, insbesondere zum Glätten von Papierbahnen, sowie Verfahren zur Herstellung einer solchen Walze**
Roll, in particular for calendering paper webs, and process for making such a roll
Rouleau, en particulier pour le calendrage de bandes de papier, et procédé pour la fabrication d' un tel rouleau

(30) Priorität: 31.03.1999 DE 19914708
(43) Veröffentlichungstag der Anmeldung: 04.10.2000
(73) Patentinhaber: Voith Paper Patent GmbH, 89522 Heidenheim (DE)
(72) Erfinder: Sohl, Carsten, 7000 Fredericia Dänemark (DK)
(74) Vertreter: Manitz, Finsterwald & Partner GbR

(56) Entgegenhaltungen:
- WO-A-98/54405
- DE-A- 19 610 949
- GB-A- 2 057 092
- US-A- 3 490 119

## Beschreibung

Die vorliegende Erfindung betrifft ein Verfahren zum Herstellen einer elastischen Walze mit einem insbesondere aus Metall bestehenden harten Walzenkern und einer elastischen Bezugsschicht, bei dem zum Bilden der Bezugsschicht zunächst eine radial innenliegende Verbindungsschicht auf den Walzenkern und anschließend eine radial außenliegende Funktionsschicht auf die Verbindungsschicht aufgebracht wird. Weiterhin ist die Erfindung auf eine Walze, insbesondere zum Glätten von Papierbahnen, gerichtet mit einem insbesondere aus Metall bestehenden harten Walzenkern, der an seiner Außenseite mit einer elastischen Bezugsschicht versehen ist, wobei diese Bezugsschicht eine radial außenliegende Funktionsschicht und eine radial innenliegende Verbindungsschicht zum Verbinden der Funktionsschicht mit dem Walzenkern umfaßt. Ein derartiges Verfahren und eine derartige Walze sind aus der US 3 490 119 A bekannt. Elastische Walzen dieser Art werden beispielsweise bei der Satinage von Papierbahnen verwendet. Dabei bildet jeweils eine elastische Walze zusammen mit einer harten Walze einen Preßspalt, durch den die zu bearbeitende Papierbahn hindurchgeführt wird. Während die harte Walze eine beispielsweise aus Stahl oder Hartguß bestehende sehr glatte Oberfläche besitzt und für die Glättung der ihr zugewandten Seite der Papierbahn zuständig ist, bewirkt die auf die gegenüberliegende Seite der Papierbahn einwirkende elastische Walze eine Vergleichmäßigung und Verdichtung der Papierbahn im Preßnip. Durch die Elastizität dieser zweiten Walze wird somit eine zu starke Verdichtung der Papierbahn verhindert, die zu einem speckigen Aussehen der Papierbahn führen würde. Die Größenordnung der Walzen liegt bei Längen von 6 bis 12 m bzw. Durchmessern von 800 bis 1500 mm. Sie halten Linienkräften bis zu 600 N/mm und Druckspannungen bis 50 N/mm² stand.

Da die Tendenz bei der Papierherstellung dahin geht, daß die Satinage im Online-Betrieb erfolgt, d.h. daß die die Papiermaschine oder Streichmaschine verlassende Papierbahn unmittelbar durch die Papierglättvorrichtung (Kalander) geführt wird, werden an die Walzen der Glättvorrichtung insbesondere bezüglich der Temperaturbeständigkeit höhere Anforderungen als bisher gestellt. Durch die im Online-Betrieb erforderlichen hohen Transportgeschwindigkeiten der Papierbahn und die damit verbundenen hohen Rotationsgeschwindigkeiten der Kalanderwalzen wird deren Biegewechselfrequenz erhöht, was wiederum zu erhöhten Walzentemperaturen führt. Diese im Online-Betrieb entstehenden hohen Temperaturen führen zu Problemen, die bei bekannten elastischen Walzen bis zur Zerstörung des Kunststoffbelages führen können. Zum einen sind bei bekannten Kunststoffbelägen maximale Temperaturdifferenzen von ca. 20°C über die Breite der Walze zulässig und zum anderen besitzen die für die Beschichtung üblicherweise verwendeten Kunststoffe einen wesentlich hoheren Temperaturausdehnungskoeffizienten als die üblicherweise verwendeten Stahlwalzen bzw. Hartgußwalzen, so daß durch eine Temperaturerhöhung hohe axiale Spannungen zwischen der Stahlwalze bzw. Hartgußwalze und der mit ihr verbundenen Kunststoffbeschichtung auftreten.

Durch diese hohen Spannungen verbunden mit insbesondere punktuell auftretenden Erhitzungsstellen innerhalb der Kunststoffbeschichtung können sogenannte Hot-Spots auftreten, an denen ein Ablösen oder sogar ein Aufplatzen der Kunststoffschicht erfolgt.

Diese Hot-Spots treten insbesondere dann auf, wenn zusätzlich zu den mechanischen Spannungen und der relativ hohen Temperatur Kristallisierungspunkte in Form von beispielsweise fehlerhaften Klebungen, Ablagerungen oder überdurchschnittliche Einbuchtungen des elastischen Belages, beispielsweise durch Falten oder Fremdkörper an der Papierbahn, vorhanden sind. In diesen Fällen kann die Temperatur an diesen Kristallisierungspunkten von üblichen 80°C bis 90°C bis auf über 150°C steigen, wodurch die erwähnte Zerstörung der Kunststoffschicht erfolgt.

Es ist eine Aufgabe der vorliegenden Erfindung ein Verfahren zur Herstellung einer elastischen Walze der eingangs genannten Art sowie eine entsprechende Walze anzugeben, bei der die Gefahr des Auftretens von Hot-Spots bei zumindest gleichbleibenden mechanischen Eigenschaften verringert wird.

Der das Verfahren betreffende Teil dieser Aufgabe wird erfindungsgemäß dadurch gelöst, daß zum Bilden der Verbindungsschicht und/oder der Funktionsschicht gleichzeitig Glasfasern und Kohlefasern auf den Walzenkern gewickelt werden, wobei das Mischungsverhältnis von Glasfasern zu Kohlefasern zwischen ca. 60/40 und ca. 90/10, bevorzugt ca. 70/30 beträgt. Eine entsprechende Walze ist erfindungsgemäß dadurch gekennzeichnet, daß die innenliegende Verbindungsschicht und/oder die Funktionsschicht aus eine Mischung von Glasfasern und Kohlefasern besteht, die in einem weichen Matrixmaterial eingebettet und im wesentlichen jeweils gleichmäßig über die Länge der Walze verteilt sind, wobei das Mischungsverhältnis von Glasfasern zu Kohlefasern zwischen ca. 60/40 und ca. 90/10, bevorzugt ca. 70/30 beträgt.

Bei einer derart hergestellten bzw. ausgebildeten Walze ist die Verbindungsschicht so ausgebildet, daß sie sowohl eine optimale mechanische, spannungsoptimierte Verbindung zwischen der Metallwalze und der außenliegenden Funktionsschicht bildet, als auch eine verbesserte Wärmeleitung und damit eine Abführung überschüssiger Wärmeenergie von Überhitzungsstellen gewährleistet.

Durch die gleichzeitige Aufbringung bzw. Mischung von Glasfasern und Kohlefasern in dem erfindungsgemäß angegebenen Verhältnis werden deren Eigenschaften optimal miteinander kombiniert. Während Glasfasern einen Wärmeausdehnungskoeffizienten besitzen, der dem von Stahl relativ nahekommt jedoch eine relativ schlechte Wärmeleitfähigkeit besitzen, ist die Wärmeleitfähigkeit von Kohlefasern sehr hoch. Gleichzeitig besitzen Kohlefasern eine ca. dreimal so hohe Steifigkeit wie Glasfasern.

Durch das erfindungsgemäß angegebene Mischungsverhältnis und die Einbettung der Fasermischung in das Matrixmaterial der Verbindungsschicht wird eine optimale Übergangsschicht zwischen der Stahlwalze und der äußeren Funktionsschicht erzeugt. Da in der Verbindungsschicht die Wärmeausdehnung in axialer Richtung vorwiegend durch die eingelegten Fasern bestimmt wird, kommt der Gesamtwärmeausdehnungskoeffizient der Verbindungsschicht mit Fasermaterial dem der Stahlwalze sehr nahe. Da aufgrund der elastischen Matrixmaterials die Verbindungsschicht weiterhin auch in axialer Richtung eine gewisse Elastizität besitzt, werden die bei einer Erwärmung in axialer Richtung auftretenden Spannungen zwischen dem Walzenkern und der außenliegenden Funktionsschicht durch die Verbindungsschicht aufgenommen und die Spannungsbelastungen somit insgesamt verringert.

Gleichzeitig wird durch die in das Matrixmaterial der Verbindungsschicht eingelegten Fasern neben einer Erhöhung der Steifigkeit der Verbindungsschicht eine Verbesserung der Wärmeleitfähigkeit innerhalb der Verbindungsschicht erreicht. Diese Verbesserung der Wärmeleitfähigkeit wird insbesondere durch die Kohlefasern erzielt, so daß innerhalb der Verbindungsschicht punktuell entstehende Hitze über die Kohlefasern in axialer Richtung abgeführt werden kann, bevor eine so starke Überhitzung auftritt, daß ein Hot-Spot entsteht.

Nach einer weiteren Ausführungsform der Erfindung werden die Glasfasern und die Kohlefasern in sogenannten Glasfaser- und Kohlefaserrovings auf den Walzenkern gewickelt, wobei ein Roving jeweils aus einer Vielzahl von nebeneinanderliegenden Fasern der gleichen Art besteht, wobei beim Wickelvorgang eine Vielzahl von nebeneinanderliegenden, aneinander angrenzenden Glasfaser- und Kohlefaserrovings zum Bilden einer Rovinglage gleichzeitig auf den Walzenkern aufgewickelt wird. Durch die Wicklung von Rovings wird eine sehr gleichmäßige Verteilung der Glasund Kohlefasern erreicht, wobei insbesondere das erfindungsgemäße Mischungsverhältnis optimal eingestellt werden kann.

Zum Bilden der Verbindungsschicht und/oder der Funktionsschicht werden bevorzugt mehrere Rovinglagen übereinander gewickelt, so daß die gewünschte Dicke der Verbindungsschicht einfach erzeugt werden kann. Jede der Rovinglagen besitzt dabei grundsätzlich das erfindungsgemäß angegeben Mischungsverhältnis von Glasfasern zu Kohlefasern, wobei dieses Mischungsverhältnis nach Bedarf zwischen einzelnen Rovinglagen innerhalb der erfindungsgemäßen Werte variiert werden kann.

Um die Einbettung der Fasern in das Matrixmaterial zu ermöglichen, können die Glasfasern und Kohlefasern vor dem Aufwickeln auf den Walzenkern mit einem weichen Matrixmaterial, insbesondere mit einer Harz/Härter-Kombination umgeben werden, insbesondere durch ein Harz/Härter-Bad gezogen werden. Es ist grundsätzlich jedoch auch möglich, daß die Glasfasern und die Kohlefasern im wesentlichen trocken auf den Walzenkern aufgewickelt werden und während oder nach dem Aufwickeln mit einem weichen Matrixmaterial, insbesondere mit einer Harz/Härter-Kombination beaufschlagt, insbesondere vollständig in das Matrixmaterial eingebettet werden.

Durch die praktisch vollständig Einbettung der Fasern in das Matrixmaterial erhält die Verbindungsschicht die erforderliche Elastizität, wobei das Matrixmaterial gleichzeitig als Verbindungsmaterial zwischen der außenliegenden Funktionsschicht und dem Walzenkern dient. Grundsätzlich ist es jedoch auch möglich, daß zwischen der Metallaußenseite des Walzenkerns und der Verbindungsschicht noch eine zusätzliche Kontaktschicht, beispielsweise eine Klebeschicht vorhanden ist.

Das Matrixmaterial besteht bevorzugt aus einem Kunststoffmaterial, insbesondere einem Duroplast oder einem Thermoplast. Dabei wird darauf hingewiesen, daß der im Zusammenhang mit dem Matrixmaterial verwendete Begriff "weich" lediglich in Relation zu der als hart bezeichneten Außenseite der Metall-, insbesondere Stahlwalze zu verstehen ist.

Nach einer weiteren vorteilhaften Ausführungsform der Erfindung beträgt der Fasergehalt der Verbindungsschicht ca. 40 bis 70 Vol.-%, insbesondere ca. 50 bis 60 Vol.-%, bevorzugt ca. 55 Vol.-%. Durch den Fasergehalt der Verbindungsschicht wird sowohl deren Steifigkeit, Wärmeleitfähigkeit als auch der Gesamtausdehnungskoeffizient bestimmt. Durch den erfindungsgemäßen Fasergehalt wird gewährleistet, daß die eingangs genannten optimalen mechanischen und thermischen Eigenschaften der Verbindungsschicht eingehalten werden.

Im Gegensatz zu der Verbindungsschicht beträgt der Fasergehalt der Funktionsschicht bevorzugt ca. 5 bis 20 Vol.-%, insbesondere ca. 8 bis 12 Vol.-%. Durch den verringerten Fasergehalt erhält die Funktionsschicht eine geringere Steifigkeit als die Verbindungsschicht, wie sie für die Vergleichmäßigung und Verdichtung der zu behandelnden Papierbahn bei der Satinage erforderlich ist. Falls durch den reduzierten Fasergehalt der Wärmeausdehnungskoeffizient der Funktionsschicht zu groß wird, kann dieser durch eine entsprechende Zugabe von Füllstoffen in das Matrixmaterial der Funktionsschicht reduziert werden.

Weitere vorteilhafte Ausführungsformen der Erfindung sind in den Unteransprüche angegeben.

Die Erfindung wir nachfolgend anhand eines Ausführungsbeispiels unter Bezugnahme auf die Zeichnungen näher beschrieben; in diesen zeigen:
- Fig. 1: eine schematische Querschnittsdarstellung einer Vorrichtung zum Separieren von Fasern in Rovings,
- Fig. 2: eine schematische Darstellung einer erfindungsgemäßen Walze während derer Herstellung und
- Fig. 3: einen Teillängsschnitt durch eine erfindungsgemäß ausgebildete Walze.

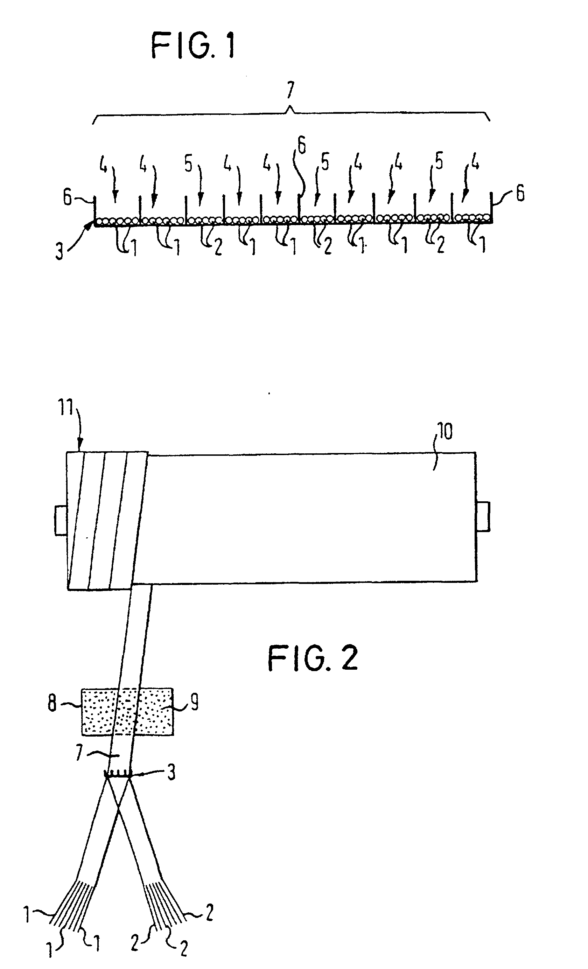

Fig. 1 zeigt eine Vielzahl von im Querschnitt dargestellten Glasfasern 1 und Kohlefasern 2, die durch eine kamm- oder rechenartige Sammeleinheit 3 jeweils zu einschichtigen Faserbündeln, sogenannten Faserrovings 4, 5 zusammengefaßt werden.

Jeweils ein Glasfaserroving 4 bzw. ein Kohlefaserroving 5 ist von dem nächstliegenden Roving 4, 5 durch einen Zahn 6 der Sammeleinheit 3 getrennt, so daß ein eindeutiges Mischungsverhältnis von Glasfasern zu Kohlefasern innerhalb des durch die Glasfaser- und Kohlefaserrovings 4,5 gebildeten Rovingbands 7 sowie eine vorgegebene Verteilung von Glasfasern und Kohlefasern entlang der Breite des Rovingbands 7 gewährleistet ist.

Das Mischungsverhältnis zwischen Kohle- und Glasfasern 2, 1 beträgt ca. 30/70, wobei jeder Roving 4, 5 beispielsweise 10000 bis 14000 Einzelfasern 1, 2 mit jeweils einer Dicke von zwischen 0,1 und 0,3mm umfaßt. Das Rovingband 7 umfaßt im vorliegenden Fall zehn Rovings 4, 5, kann jedoch grundsätzlich auch weniger oder mehr Rovings, beispielsweise 8 bis 16 Rovings umfassen.

Während in Fig. 1 die Rovings 4, 5 ideal als einschichtige Lagen dargestellt sind, besteht ein Roving in der Praxis aus einer Vielzahl von Faserlagen, von denen jede Einzelfaser einen Durchmesser von ca. 8 bis 12µm und em Roving eine Dicke von ca. 0,1 bis 0,3mm, beispielsweise 0,2mm besitzt. Wesentlich ist lediglich, daß die Breite eines Rovings 4, 5 im Verhältnis zur Dicke deutlich größer ist, so daß er annähernd einen einschichtigen Aufbau besitzt.

In Fig. 2 ist dargestellt, wie die Glasfasern 1 und die Kohlefasern 2 über die Sammeleinheit 3 geführt und zu dem Rovingband 7 zusammengefaßt werden, woraufhin sie durch eine schematisch dargestellte Imprägniervorrichtung 8 geführt werden. In der Imprägniervorrichtung 8 werden die einzelnen Rovings 4, 5 mit einem flüssigen Matrixmaterial 9 beschichtet, so daß die Rovings 4, 5 im wesentlichen vollständig in dem Matrixmaterial 9 eingebettet sind. Bei dem Matrixmaterial 9 kann es sich dabei um einen Kunststoff, insbesondere um eine Harz/Härter-Kombination handeln.

Das durch die Imprägniervorrichtung 8 vollständig mit dem Matrixmaterial 9 umgebene Rovingband 7 wird auf einen Walzenkern 10 Stoß an Stoß aufgewickelt, so daß nach einem Wickeldurchgang über die gesamte Länge des Walzenkerns 10 dieser vollständig mit einer Rovinglage beschichtet ist.

Dieser Beschichtungsvorgang kann mehrere Male wiederholt werden, bis eine Verbindungsschicht 11 mit einer Dicke von beispielsweise 3 bis 10mm erzeugt ist.

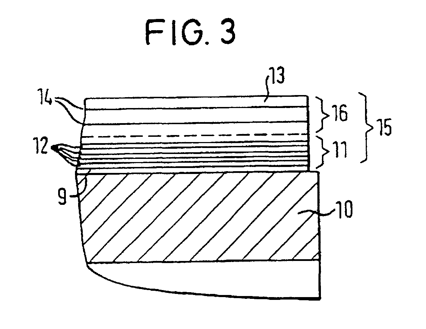

Der Aufbau der Verbindungsschicht 11 ist in Fig. 3 näher dargestellt. Aus der Fig. 3 ist zu erkennen, daß die Verbindungsschicht 11 aus eine Vielzahl von radial übereinanderliegenden Rovinglagen 12 besteht, die jeweils in das Matrixmaterial 9 eingebettet sind. Der Anteil der Fasern 1, 2 der Rovinglagen 12 an der Verbindungsschicht 11 beträgt ca. zwischen 40 bis 70 Vol.-%, so daß die mechanischen und thermischen Eigenschaften der Verbindungsschicht 11 überwiegend durch die Fasern 1, 2 bestimmt sind. Zur Bildung einer Bezugsschicht 15 schließt sich radial nach außen an die Verbindungsschicht 11 die eigentliche Funktionsschicht 16 an, die ebenfalls aus einem Matrixmaterial 13 besteht, das insbesondere gleich dem Matrixmaterial 9 sein kann. Auch in der Funktionsschicht 16 sind Rovinglagen 14 entsprechend den Rovinglagen 12 der Verbindungsschicht 11 eingebettet, wobei hier jedoch der Volumenanteil der Rovinglagen 14 bezogen auf das Volumen der Funktionsschicht 16 deutlich geringer ist und beispielsweise 8 bis 12 Vol.-% beträgt. Durch diesen verringerten Fasergehalt ist die Funktionsschicht 16 wesentlich elastischer als die Verbindungsschicht 11.

Durch die in das Matrixmaterial 9 der Verbindungsschicht 11 eingebetteten Glasfasern 1 und Kohlefasern 2 wird erreicht, daß der Temperaturausdehnungskoeffizient der Verbindungsschicht 11 einen Wert erhält, der dem Temperaturausdehnungskoeffizienten des beispielsweise aus Stahl bestehenden Walzenkems 10 nahekommt. Bei einer im Betrieb auftretenden Temperaturerhöhung wird somit eine in axialer Richtung auftretende Längenausdehnung des Walzenkerns 10 von einer entsprechenden Ausdehnung der Verbindungsschicht 11 begleitet, so daß zwischen dem Walzenkern 10 und der Verbindungsschicht 11 auftretende Längsspannungen in Axialrichtung minimiert werden. Die Funktionsschicht 16, deren Wärmeausdehnungskoeffizient vorwiegend von dem Matrixmaterial 13, d.h. von dem Harz/Härter-Gemisch bestimmt wird, dehnt sich bei einer entsprechenden Erwärmung zwar deutlich mehr in axialer Richtung aus, die aufgrund der Verbindung zwischen der Funktionsschicht 16, der Verbindungsschicht 11 und dem Walzenkern 10 entstehenden Längsspannungen werden jedoch durch die Elastizität der Verbindungsschicht 11 weitgehend aufgefangen.

Zusätzlich bewirken die in den Rovinglagen 12 und 14 enthaltenen Kohlefasern eine sehr gute axiale Wärmeleitfähigkeit der Verbindungsschicht 11 bzw. der Funktionsschicht 16, so daß die Hitze von eventuell entstehenden Überhitzungspunkten innerhalb der Verbindungsschicht 11 schnell in axialer Richtung abgeleitet werden kann, so daß die Temperatur innerhalb der Verbindungsschicht 11 sowie der Funktionsschicht 16 zuverlässig unterhalb einer kritischen Grenztemperatur bleibt. Das Auftreten von Hot-Spots kann auf die Weise zuverlässig verhindert werden.

### Bezugszeichenliste

- 1: Glasfasern
- 2: Kohlefasern
- 3: Sammeleinheit
- 4: Glasfaserroving
- 5: Kohlefaserroving
- 6: Zähne
- 7: Rovingband
- 8: Imprägniervorrichtung
- 9: Matrixmaterial
- 10: Walzenkern
- 11: Verbindungsschicht
- 12: Rovinglagen
- 13: Matrixmaterial
- 14: Rovinglagen
- 15: Bezugsschicht
- 16: Funktionsschicht

## Patentansprüche

1. Verfahren zum Herstellen einer elastischen Walze mit einem insbesondere aus Metall bestehenden harten Walzenkern (10) und einer elastischen Bezugsschicht (15), bei dem zum Bilden der Bezugsschicht (15) zunächst eine radial innenliegende Verbindungsschicht (11) auf den Walzenkern (10) und anschließend eine radial außenliegende Funktionsschicht (16) auf die Verbindungsschicht (11) aufgebracht wird,
**dadurch gekennzeichnet,**
**daß** zum Bilden der Verbindungsschicht (11) und/oder der Funktionsschicht (16) gleichzeitig Glasfasern (1) und Kohlefasern (2) auf den Walzenkern (10) gewickelt werden, wobei das Mischungsverhältnis von Glasfasern (1) zu Kohlefasern (2) zwischen ca. 60/40 und ca. 90/10, bevorzugt ca. 70/30 beträgt.

2. Verfahren nach Anspruch 1,
**dadurch gekennzeichnet,**
**daß** die Glasfasern (1) und die Kohlefasern (2) in sogenannten Glasfaserund Kohlefaserrovings (4,5) auf den Walzenkern (10) gewickelt werden, wobei ein Roving jeweils aus einer Vielzahl von nebeneinanderliegenden Fasern der gleichen Art besteht, und daß beim Wickelvorgang eine Vielzahl von nebeneinander liegenden, aneinander angrenzenden Glasfaser- (4) und Kohlefaserrovings (5) zum Bilden einer Rovinglage gleichzeitig auf den Walzenkern (10) aufgewickelt wird.

3. Verfahren nach Anspruch 2,
**dadurch gekennzeichnet,**
**daß** zum Bilden der Verbindungsschicht (11) und/oder der Funktionsschicht (16) mehrere Rovinglagen übereinander gewickelt werden.

4. Verfahren nach einem der vorhergehenden Ansprüche,
**dadurch gekennzeichnet,**
**daß** die Glasfasern (1) und Kohlefasern (2) vor dem Aufwickeln auf den Walzenkern (10) mit einem weichen Matrixmaterial (13), insbesondere mit einer Harz/Härter-Kombination umgeben werden, insbesondere durch ein Harz/Härter-Bad gezogen werden.

5. Verfahren nach einem der Ansprüche 1 bis 3,
**dadurch gekennzeichnet,**
**daß** die Glasfasern (1) und die Kohlefasern (2) im wesentlichen trocken auf den Walzenkern (11) aufgewickelt werden und während oder nach dem Aufwickeln mit einem weichen Matrixmaterial (13), insbesondere mit einer Harz/Härter-Kombination beaufschlagt, insbesondere vollständig in das Matrixmaterial eingebettet werden.

6. Walze, insbesondere zum Glätten von Papierbahnen, mit einem insbesondere aus Metall bestehenden harten Walzenkern (10), der an seiner Außenseite mit einer elastischen Bezugsschicht (15) versehen ist, wobei diese Bezugsschicht (15) eine radial außenliegende Funktionsschicht (16) und eine radial innenliegende Verbindungsschicht (11) zum Verbinden der Funktionsschicht (16) mit dem Walzenkern (10) umfaßt, insbesondere hergestellt gemäß dem Verfahren nach einem der vorhergehenden Ansprüche,
**dadurch gekennzeichnet,**
**daß** die innenliegende Verbindungsschicht (11) und/oder die außenliegende Funktionsschicht (16) aus einer Mischung von Glasfasern (1) und Kohlefasern (2) besteht, die in einem weichen Matrixmaterial (9, 13) eingebettet und im wesentlichen jeweils gleichmäßig über die Länge der Walze verteilt sind, wobei das Mischungsverhältnis von Glasfasern (1) zu Kohlefasern (2) zwischen ca. 60/40 und ca. 90/10, bevorzugt ca. 70/30 beträgt.

7. Walze nach Anspruch 6,
**dadurch gekennzeichnet,**
**daß** das Matrixmaterial (9, 13) ein Kunststoff, insbesondere ein Duroplast oder ein Thermoplast ist.

8. Walze nach Anspruch 6 oder 7,
**dadurch gekennzeichnet,**
**daß** das Matrixmaterial (9, 13) eine Harz/Härter-Kombination ist.

9. Walze nach einem der Ansprüche 6 bis 8,
**dadurch gekennzeichnet,**
**daß** der Fasergehalt der Verbindungsschicht (11) ca. 40 bis 70 Vol.-%, insbesondere ca. 50 bis 60 Vol.-%, bevorzugt ca. 55 Vol.-% beträgt.

10. Walze nach einem der Ansprüche 6 bis 9,
**dadurch gekennzeichnet,**
**daß** der Fasergehalt der Funktionsschicht (16) ca. 5 bis 20 Vol.-%, insbesondere ca. 8 bis 12 Vol.-% beträgt.

## Claims

1. Method for producing a resilient roll having a hard roll core (10) consisting in particular of metal and- a resilient covering layer (15), in which, in order to form the covering layer (15), first a radially inner connecting layer (11) is applied to the roll core (10) and then a radially outer functional layer (16) is applied to the connecting layer (11), **characterized in that** in order to form the connecting layer (11) and/or the functional layer (16), glass fibres (1) and carbon fibres (2) are wound simultaneously onto the roll core (10), the mixture ratio of glass fibres (1) to carbon fibres (2) being between approximately 60/40 and approximately 90/10, preferably approximately 70/30.

2. Method in accordance with claim 1, **characterized in that** the glass fibres (1) and the carbon fibres (2) are wound onto the roll core (10) in so-called glass fibre and carbon fibre rovings (4, 5), a roving in each case consisting of a large number of fibres of the same type lying beside one another, and **in that** during the winding procedure a plurality of glass fibre rovings (4) and carbon fibre rovings (5) lying beside one another and adjoining one another are wound simultaneously onto the roll core (10) to form a roving layer.

3. Method in accordance with claim 2, **characterized in that**, in order to form the connecting layer (11) and/or the functional layer (16), a plurality of roving layers are wound over one another.

4. Method in accordance with any one of the preceding claims, **characterized in that**, before being wound onto the roll core (10), the glass fibres (1) and the carbon fibres (2) are surrounded with a soft matrix material (13), in particular with a resin/hardener combination, being in particular drawn through a resin/hardener bath.

5. Method in accordance with any one of claims 1 to 3, **characterized in that** the glass fibres (1) and the carbon fibres (2) are substantially wound dry onto the roll core (10) and have a soft matrix material (13), in particular a resin/hardener combination, applied to them during or after the winding operation, in particular being embedded completely in the matrix material.

6. Roll, in particular for smoothing paper webs, having a hard roll core (10) consisting in particular of metal, which is provided on its outer side with a resilient covering layer (15), this covering layer (15) comprising a radially outer functional layer (16) and a radially inner connecting layer (11) for the connection of the functional layer (16) to the roll core (10), in particular produced in accordance with the method in accordance with any one of the preceding claims, **characterized in that** the inner connecting layer (11) and/or the outer functional layer (16) consist(s) of a mixture of glass fibres (1) and carbon fibres (2), which are embedded in a soft matrix material (9, 13) and are substantially each distributed uniformly over the length of the roll, the mixture ratio of glass fibres (1) to carbon fibres (2) being between approximately 60/40 and approximately 90/10, preferably approximately 70/30.

7. Roll in accordance with claim 6, **characterized in that** the matrix material (9, 13) is a plastic, in particular a thermosetting plastic or a thermoplastic.

8. Roll in accordance with claim 6 or claim 7, **characterized in that** the matrix material (9, 13) is a resin/hardener combination.

9. Roll in accordance with any one of claims 6 to 8, **characterized in that** the fibre content of the connecting layer (11) is approximately 40 to 70% by volume, in particular approximately 50 to 60% by volume, preferably approximately 55% by volume.

10. Roll in accordance with any one of claims 6 to 9, **characterized in that** the fibre content of the functional layer (16) is approximately 5 to 20% by volume, in particular approximately 8 to 12% by volume.

## Revendications

1. Procédé destiné à la fabrication d'un cylindre élastique, comportant un noyau de cylindre (10) dur constitué notamment de métal et une couche de revêtement élastique (15), dans lequel une couche de liaison (11) située radialement à l'intérieur est appliquée dans un premier temps sur le noyau de cylindre (10) pour la réalisation de la couche de revêtement (15), et ensuite une couche de fonction (16) située radialement à l'extérieur est appliquée sur la couche de liaison (11),
**caractérisé en ce que**,
pour la réalisation de la couche de liaison (11) et/ou de la couche de fonction (16), des fibres de verre (1) et des fibres de carbone (2) sont enroulées simultanément sur le noyau de cylindre (10), le rapport de mélange entre les fibres de verre (1) et les fibres de carbone (2) étant compris entre environ 60/40 et environ 90/10, et étant de préférence de l'ordre d'environ 70/30.

2. Procédé selon la revendication 1,
**caractérisé en ce que**
les fibres de verre (1) et les fibres de carbone (2) sont enroulées sur le noyau de cylindre (10) dans dedits stratifils (4, 5) de fibres de verre et de fibres de carbone, un stratifil étant à chaque fois constitué de multiples fibres de même nature situées côte à côte, et **en ce que** lors du processus d'enroulement, de multiples stratifils (4) de fibres de verre et stratifils (5) de fibres de carbone situés côte à côte et adjacents les uns aux autres sont enroulés simultanément sur le noyau de cylindre (10) pour la réalisation d'une couche de stratifils.

3. Procédé selon la revendication 2,
**caractérisé en ce que**,
pour la réalisation de la couche de liaison (11) et/ou de la couche de fonction (16), plusieurs couches de stratifils sont enroulées les unes au-dessus des autres.

4. Procédé selon l'une quelconque des revendications précédentes,
**caractérisé en ce que**,
avant l'enroulement sur le noyau de cylindre (10), les fibres de verre (1) et les fibres de carbone (2) sont entourées d'un matériau de matrice mou (13), notamment d'une combinaison de résine / durcisseur et sont notamment tirées à travers un bain de résine / durcisseur.

5. Procédé selon l'une quelconque des revendications 1 à 3,
**caractérisé en ce que**
les fibres de verre (1) et les fibres de carbone (2) sont enroulées à l'état sensiblement sec sur le noyau de cylindre (11) et sont entourées pendant ou après l'enroulement d'un matériau de matrice mou (13), notamment d'une combinaison de résine / durcisseur et sont notamment entièrement incorporées dans le matériau de matrice.

6. Cylindre destiné notamment au calandrage de bandes de papier, comportant un noyau de cylindre (10) dur constitué notamment de métal qui est muni sur sa face extérieure d'une couche de revêtement élastique (15), cette couche de revêtement (15) englobant une couche de fonction (16), située radialement à l'extérieur et une couche de liaison (11), située radialement à l'intérieur pour la liaison de la couche de fonction (16) avec le noyau de cylindre (10), fabriqué notamment d'après le procédé selon l'une quelconque des revendications précédentes,
**caractérisé en ce que**
la couche de liaison (11) située à l'intérieur et/ou la couche de fonction (16) située à l'extérieur sont constituées d'un mélange de fibres de verre (1) et de fibres de carbone (2) qui sont incorporées dans un matériau de matrice mou (9, 13) et qui sont sensiblement réparties de façon homogène sur la longueur du cylindre, le rapport de mélange entre les fibres de verre (1) et les fibres de carbone (2) étant compris entre environ 60/40 et environ 90/10, et étant de préférence de l'ordre d'environ 70/30.

7. Cylindre selon la revendication 6,
**caractérisé en ce que**
le matériau de matrice (9, 13) est une matière plastique, notamment une résine thermodurcissable ou une matière thermoplastique.

8. Cylindre selon la revendication 6 ou 7,
**caractérisé en ce que**
le matériau de matrice (9, 13) est une combinaison de résine / durcisseur.

9. Cylindre selon l'une quelconque des revendications 6 à 8,
**caractérisé en ce que**
la teneur en fibres de la couche de liaison (11) est de l'ordre d'environ 40 à 70 % en volume, notamment de l'ordre d'environ 50 à 60 % en volume, de préférence de l'ordre d'environ 55 % en volume.

10. Cylindre selon l'une quelconque des revendications 6 à 9,
**caractérisé en ce que**
la teneur en fibres de la couche de fonction (16) est de l'ordre d'environ 5 à 20 % en volume, notamment de l'ordre d'environ 8 à 12 % en volume.
